Europäisches Patentamt

European Patent Office

Office européen des brevets

(11) Publication number: **0 003 841**
**B1**

# EUROPEAN PATENT SPECIFICATION

(45) Date of publication of patent specification: **13.11.85**

(21) Application number: **79100539.0**

(22) Date of filing: **23.02.79**

(51) Int. Cl.⁴: **G 05 D 23/22,** H 05 B 1/02,
G 05 F 1/66

(54) **Power control circuit.**

<table>
<tr><td>

(30) Priority: **24.02.78 US 880945**

(43) Date of publication of application:
**05.09.79 Bulletin 79/18**

(45) Publication of the grant of the patent:
**13.11.85 Bulletin 85/46**

(84) Designated Contracting States:
**BE DE FR GB IT LU NL**

(56) References cited:
**FR-A-1 348 552**
**US-A-3 336 531**
**US-A-3 440 517**
**US-A-3 891 931**
**US-A-4 004 214**

</td><td>

(73) Proprietor: **E.I. DU PONT DE NEMOURS AND COMPANY**
**1007 Market Street**
**Wilmington Delaware 19898 (US)**

(72) Inventor: **Chow, Allan Tit-Shing**
**109 Banbury Drive**
**Windsor Hills Wilmington, Del. 19803 (US)**

(74) Representative: **Abitz, Walter, Dr.-Ing. et al**
**Abitz, Morf, Gritschneder P.O. Box 86 01 09**
**D-8000 München 86 (DE)**

</td></tr>
</table>

Courier Press, Leamington Spa, England.

## Description

The invention relates to a power control circuit for controlling the electrical energy supplied to a load from a sinusoidal alternating current source in accordance with an error signal. The power control circuit controls the firing moment of a switching element which is situated between said source and said load for supplying energy starting from the firing moment of the switching element to the end of each half cycle of the sine wave alternating current source signal. This circuit comprises a control means including a zero-crossover detector responsive to an alternating current signal from said alternating current source for producing zero-crossover pulses corresponding to the zero-crossover time of said alternating current signal, evaluating means including integrator means being responsive to the zero-crossover pulses and the square of the voltage in each half cycle of said alternating current signal for generating an output signal indicative of the energy that can be supplied to the load as a function of the duty cycle of the alternating current signal during each half cycle of the alternating current signal and comparator means for comparing the output signal with said error signal and for controlling the firing moment of said switching element to vary the duty cycle of said alternating current signal supplied to the load from said source.

Many devices have been developed over the years for the purpose of precisely controlling the power supplied to loads in accordance with a control or error signal. One use for such a device is that of controlling the temperature of an analytical instrument which is designed to heat a sample to a specified temperature. This heating may occur at a specified rate or may be maintained at some isothermal value. Unfortunately, the power supplied to the load may vary with fluctuations in the input line voltage or its wave shape. Any variations of this type cannot be tolerated since they introduce errors in the power supplied to the load.

A power control circuit is known in accordance with the prior art portion of claim 1 (US—A—3,891,931) in which the evaluating means is designed such that its output signal, in each half cycle of the alternating current signal, is instantaneously proportional to the energy that has been supplied to the load and has its highest value at the end of each half cycle of the alternating current signal and includes mainly a capacitor to integrate the squared alternating current signal. A compensation of variations in amplitude of the alternating current source signal is necessary. The precision of this power control circuit is limited because in addition to the alternating current source signal noise might be integrated by the evaluating means with the noise amounting to a relatively high percentage of the output signal, especially when the switching element is opened at a small firing angle.

The invention as claimed in claim 1 solves the problem of how to design a power control circuit which is able to achieve precise power control even with low error signals. The precise power control is achieved by the power control circuit of the invention in that essentially no accumulation of noise takes place.

The power control circuit of the invention offers the advantage that the effect of variations in amplitude of the alternating current source signal do not effect the precision of the power control.

Several ways of carrying out the invention are described in detail below with reference to drawings, in which:

Figure 1 is a block diagram of a generalized form of a power control circuit;

Figure 2 is a partial block, partial schematic diagram of a power control circuit, showing the details of the translator portion of the block diagram illustrated in Fig. 1, and

Figure 3 is a wave form diagram in which the power supplied to a load is plotted against duty cycle to depict the manner in which power is controlled as a function of firing time of a switch.

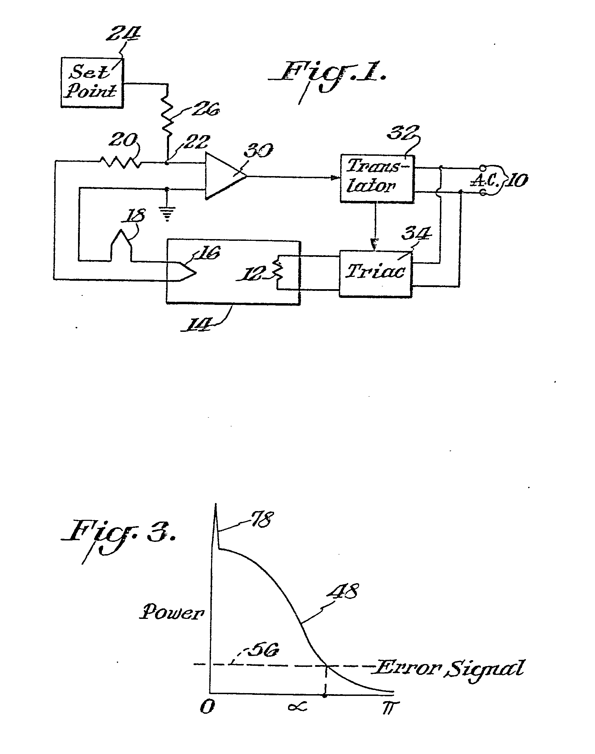

There is shown in Figure 1 a conventional power control circuit in which energy from a alternating current source 10 (line voltage) is supplied to a load 12, which in this instance is depicted as a resistive heating element. This element may be disposed in an oven 14, say of an analytical instrument. While the energy is illustrated as being supplied to a resistive load, it is to be understood, that energy may also be supplied to other type loads, such as and including electric motors and the like. The circuit also includes a sensing device 16, such as a sample thermocouple, which is disposed in the oven 14 to sense the temperature of the oven 14, which is the desired variable in the illustrated case. Other sensing devices, of course, would be used when other variables are being sensed.

In the case of a thermocouple as sensing device 16, a reference junction 18 is provided so that a voltage proportional to the difference in temperature between the sample junction and the reference junction 18 is transmitted through a resistor 20 to a summing junction 22. Also coupled to this summing junction is a set point or reference signal derived from a set point device 24. This reference signal may be a fixed value or a programmed value designed to provide a set point or reference signal which varies in a manner in which it is desired to vary property to be controlled. This reference signal is passed through a resistor 26 to the summing junction 22 The summation signal is applied through an amplifier 30 to a translator 32. The translator 32, which may also be termed a controller, develops a trigger voltage signal which is passed to control a triac 34 as current switching device, thereby to vary the duty cycle of the alternating current signal that is applied to the load 12. By varying the duty cycle, the energy supplied to the load 12 may be varied. This translator 32 includes a zero-crossover detector 42 and certain circuitry to vary the time, following each zero-crossover point, at which the triac 34 is switched on. The translator 32 also provides switching pulses that occur in time as a function of not only the energy that is to be supplied to the load 12 but which also is a function of the wave form of the line voltage. Hence, energy supplied to the load is precisely controlled.

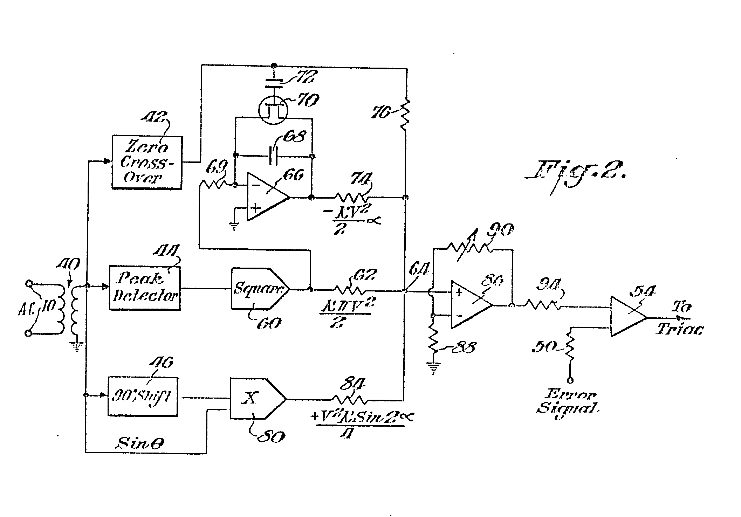

The details of this translator 32 are more clearly depicted in Fig. 2. In Fig. 2 the alternating current source terminals are coupled through a transformer 40 to a zero-crossover detector 42, a peak detector 44, and a 90° phase shift circuit 46. The conventional zero-crossover detector 42 provides a pulse output at each zero-crossing time of the alternating current wave form. The detector 42 may be of any conventional type, such as that provided by any of the known integrated circuit chips or, for that matter, may be designed using transistors. The peak detector 44 also may be conventional involving the standard series diode, bypass capacitor network. In like manner, the 90° phase shift circuit 46 may be any of those used conventionally. These circuits do not form a part of this invention, and hence are not described in greater detail.

The outputs of these three circuits, 42, 44 and 46, are now applied to circuitry designed, to effect the integration of the alternating current source signal applied at the input terminal. This input signal is denoted by the formula V sine θ, where V is the peak value of the alternating current signal and θ is the phase angle, which with each half cycle will vary between 0 and π. To determine the actual energy supplied to the resistive load depicted in Fig. 1, since energy P is proportional to the square of the voltage in resistive loading:

$$P = K \int_{\alpha}^{\pi} (V \sin \theta)^2 d\theta$$

$$= KV^2 \int_{\alpha}^{\pi} \sin^2\theta \, d\theta =$$

$$= KV^2 \int_{\alpha}^{\pi} \frac{1}{2} [1 - \cos 2\theta] \, d\theta$$

$$= \frac{KV^2}{2} [\theta - 1/2 \sin 2\theta] \Big|_{\alpha}^{\pi}$$

$$= \frac{KV^2}{2} [\pi - \alpha + 1/2 \sin 2\alpha]$$

In this derivation the angle α is the angle from the zero-crossover point to the point at which the actual firing of the triac 34 occurs, such that the resulting wave form that will be generated by this circuit is depicted in Fig. 3 and represented by the curve of the output signal 48. According to this curve, if the firing angle is early, i.e., α≈0°, maximum energy will be supplied to the resistive load 12 whereas as the angle α increases up to π, the next zero-crossover point, the energy will be steadily decreased in accordance with the Z shaped function of the output signal 48. The error signal, indicating energy demand for the load 12 derived from the amplifier 30 (Fig. 1), is coupled through a resistor 50 to a comparator 54, whose second input terminal is the output signal 48. Thus, when the error signal 56 depicted by the dashed line (Fig. 3) equals the Z-shaped function of the output signal 48, the comparator 54 supplies an output pulse to the triac 34 (Fig. 1) to turn this current switching device on so that the energy supplied to the rest of that cycle will be that depicted by intersection of the error signal with the Z-shaped curve of the output signal 48.

The generation of this curve, as noted, requires a near sinusoidal input signal and is accomplished by solving the integral depicted above. To do so, the first term of the integrated expression is derived by coupling the output of the peak detector 44 to a squaring circuit 60 whose output ($K\pi V^2/2$) is coupled through a summing resistor 62 to a summing junction 64 to provide the second term of the integrated expression. The output of the squaring circuit 60 is coupled through a resistor 69 to the negative input of a typical integrator which consists of an operational amplifier 66 and a feedback capacitor 68. The integrating or feedback capacitor 68 for the integrator is shunted by a switching transistor 70, in this case depicted as an FET transistor, coupled to receive the output of the zero-crossover detector 42 through an isolating capacitor 72. In this manner, the output of the integrator provides the second term ($-KV^2 \alpha/2$) through the resistor 74 to the summing junction 64.

To avoid problems, in the event the error signal 56 exceeds the amplitude of the Z-shaped curve of the output signal 48, the pulses from the zero-crossover detector 42 are also coupled through a resistor 76 to the summing junction 64, such that at the beginning of each cycle, the Z-shaped curve is modified by a sharp spike depicted at 78 (Fig. 3). This ensures triggering at or close to the zero-crossover point, in the event of a very large error signal 56, such that maximum energy is supplied to the load 12.

Finally, the third term of the integrated expression is supplied by coupling the output of the 90° phase shift circuit 46 together with the alternating current signal, which represents sin θ, to the inputs of a multiplier circuit 80. The output of this circuit is the term

$$(+ \frac{V^2 K}{4} \sin 2\alpha).$$

This ouwput signal is coupled through a resistor 84 to the summing junction 64. This summing junction is coupled through an amplifier 86, the other input of which is grounded through a resistor 88. The output of the amplifier 86 is connected back through an adjustable resistor 90 to determine the gain value which is the ratio of the resistive values of 90 and 88. In this manner, the summed output representing the instantaneous energy available to the load 12 depending upon firing at a particular angle, i.e., the Z-curve of the output signal 48. This output, or Z curve, is coupled through a resistor 94 to one input of the comparator 54 which provides an output pulse when the Z-curve amplitude equals that of the error signal 56 applied to the second input of the comparator.

It is thus apparent that when comparison is achieved, an output pulse signal is applied to the triac 34, which effects gating at the proper time position during each half cycle of the alternating current input signal. This power control circuit is thus seen to afford the possibility of accounting for variances in the wave form, variances in line voltage, and yet providing a precise energy output to a load 12 simply by controlling the firing angle of a triac 34. This makes this apparatus particularly useful for the precision heater control of thermal analysis cells, for example. The apparatus provides automatic compensation for voltage variation such that a dynamic range of a seven fold supply line voltage change can be handled.

In an alternative embodiment, the translator 32 depicted in Fig. 1 may be in the form of a microcomputer coupled with a read only memory (ROM) in which a sine look up table is stored in the memory in synchronism with the alternating current signal and using a peak detector for supplying the peak voltage to the microcomputer. The function $V^2 \sin^2 \theta$ may be integrated by successive approximation. In this manner, the same Z-shaped curve of the output signal 48 is generated which may be applied to the comparator 54 for control of the firing point of the triac.

Still another embodiment of the invention uses a microcomputer that can be used to compute a series representing the function $V^2 \sin^2 \theta$ such that the interval is computed on a real time basis in synchronism with the wave form. This output signal which correlates to the Z-shaped curve of the output signal 48 again may be coupled to the comparator 54 for control of the firing angle.

**Claims**

1. A power control circuit for controlling the electrical energy supplied to a load (12) from a sinusoidal alternating current source (10) in accordance with an error signal (56), thereby controlling the firing moment of a switching element (34) which is situated between said source and said load for supplying energy starting from the firing moment of the switching element to the end of each half cycle of the sine wave alternating current source signal, the circuit comprising a control means (32) including

— a zero-crossover detector (42) responsive to an alternating current signal from said alternating current source (10) for producing zero-crossover pulses corresponding to the zero-crossover time of said alternating current signal,

— evaluating means including integrator means being responsive to the zero-crossover pulses and the square of the voltage in each half cycle of said alternating current signal for generating an output signal (48) indicative of the energy that can be supplied to the load (12) as a function of the duty cycle of the alternating current signal during each half cycle of the alternating current signal and

— comparator means (54) for comparing the output signal (48) with said error signal (56) and for controlling the firing moment of said switching element to vary the duty cycle of said alternating current signal supplied to the load (12) from said source (10)

characterized in that

— said error signal indicates the energy demand for the load,

— said evaluating means is designed such that its output signal (48), the terms of which represent the integration of the square of the sine wave alternating current source signal from the firing moment to the end of each half cycle, in each half cycle of the alternating current signal, is instantaneously proportional to the actual energy that can be supplied to the load (12) as a function of the duty cycle of said alternating current signal, and is of zero magnitude at the end of each half cycle of the alternating current signal,

— said evaluating means for determining all the terms of the output signal (48) includes means (44, 46 and 60 through 84) for determining the square of the peak voltage value of said alternating current signal, and for supplying said square of the peak voltage value to said integrator means, and for determining the further terms of the output signal (48), and for summing all terms to get the output signal, and

— said switching element is a triac (34).

2. A control circuit according to Claim 1 characterized by said evaluating means including:

— a peak detector (44) for detecting the peak voltage value of said alternating current signal,

— a squaring circuit (60) coupled to said peak detector (44) for generating the square of the peak voltage value, with the integrator (66, 68) being coupled to said squaring circuit (60) for integrating said square of the peak voltage value to provide an integrated squared signal,

— a trigonometric function generating circuit (46, 80) for generating a sin $2\theta$ signal where $\theta$

varies from 0 to π during each half cycle of said alternating current signal,

— a switch (70) coupled to said zero-crossover detector (42) for resetting said integrator (66, 68) every zero-crossover time of said alternating current signal, and

— adder (64, 86) means for continuously summing said squared signal, said integrated squared signal and said sin 2 θ signal.

3. A control circuit according to Claim 1 characterized by

— said evaluating means generating the output signal by generating a trigonometric sine function in synchronism with said alternating current signal and

— integrating the square of the product of said peak voltage value and said sine function each half cycle of said alternating current signal.

**Revendications**

1. Circuit de commande de puissance pour commander l'énergie électrique fournie à une charge (12) à partir d'une source (10) de courant alternatif sinusoidal en concordance avec un signal d'erreur (56), commandant ainsi l'instant de déclenchement d'un commutateur (34) qui est disposé entre ladite source et ladite charge pour fournir de l'énergie à partir de l'instant de déclenchement du commutateur à la fin de chaque demi-période de l'onde sinusoidale du signal de courant alternatif de la source, ce circuit comportant un dispositif de commande (32) comprenant un détecteur (42) de passage à zéro sensible à un signal de courant alternatif provenant de ladite source (10) de courant alternatif pour produire des impulsions de passage à zéro correspondant à l'instant du passage à zéro dudit signal de courant alternatif, un dispositif d'évaluation comprenant un intégrateur sensible aux impulsions de passage à zéro et au carré de la tension dans chaque demi période dudit signal de courant alternatif pour engendrer un signal de sortie (48) indicatif de l'énergie que peut être fournie à la charge (12) en fonction du coefficient d'utilisation du signal de courant alternatif pendant chaque demi-période du signal de courant alternatif, et un comparateur (54) pour comparer le signal de sortie (48) audit signal d'erreur (56) et pour commander l'instant de déclenchement du commutateur pour modifier le coefficient d'utilisation dudit signal de courant alternatif fourni à la charge (12) à partir de ladite source (10), caractérisé en ce que ledit signal d'erreur indique la demande d'énergie de la charge, le dispositif d'évaluation étant conçu de telle sorte que son signal de sortie (48) dont les termes représentent l'intégration du carré du signal d'onde sinusoidale de la source de courant alternatif à partir de l'instant de déclenchement jusqu'à la fin de chaque demi-période dans chaque demi-période du signal de courant alternatif est instantanément proportionnel à l'énergie réelle qui peut être fournie à la charge (12) en fonction du coefficient d'utilisation dudit signal de courant alternatif, et a une grandeur zéro à la fin de chaque demi-période du signal de courant alternatif, le dispositif d'évaluation pour déterminer tous les termes du signal de sortie (48) comprenant des moyens (44, 46 et 60 à 84) pour déterminer le carré de la valeur de la tension de crère dudit signal de courant alternatif, et pour appliquer ledit carré de la valeur de la crète de tension au dispositif intègrateur, et pour déterminer les autres termes du signal de sortie (48) et pour additionner tous les termes afin d'établir le signal de sortie, et ledit commutateur étant un triac (34).

2. Circuit de commande selon la revendication 1, caractérisé en ce que le dispositif d'évaluation comprend un détecteur (44) de crète pour détecter la valeur de la tension de crète dudit signal de courant alternatif, un circuit (60) d'élèvation au carré couplé au détecteur de crète (44) pour engendrer le carré de la valeur de la tension de crète; l'intègrateur (66, 68) étant couplé audit circuit (60) d'élèvation au carré pour intègrer ledit carré de la valeur de la tension crète pour fournir un signal intègré au carré, et un circuit (46, 80) de génération d'une fonction trigonomètrique pour engendrer un signal Sin 2θ lorsque θ varie depuis 0 jusqu'à π pendant chaque demi-période dudit signal de courant alternatif, un commutateur (70) couplé audit détecteur (42) de passage à zéro pour rétablir ledit intègrateur (66, 68) à chaque instant de passage à zéro dudit signal de courant alternatif, et des moyens de sommation (64, 86) pour additionner en continu ledit signal élevé au carré, ledit signal intègré élevé au carré et ledit signal Sin 2θ.

3. Circuit de commande suivant la revendication 1, caractérisé en ce que le dispositif d'évaluation engendre le signal de sortie en engendrant une fonction trigonomètrique sinusoidale en synchronisme avec ledit signal de courant alternatif et intègre le carré du produit de ladite valeur de tension de crète, et ladite fonction sinusoidale à chaque demi période dudit signal de courant alternatif.

**Patentansprüche**

1. Ein Leistungssteuerungsschaltkreis zur Steuerung der elektrischen Energie, die von einer Sinus-Wechselspannungsquelle (10) entsprechend einem Fehlersignal (56) einem Verbraucher (12) zugeführt wird, wodurch der Zündzeitpunkt eines Schaltelements (34) gesteuert wird, das zwischen der Quelle und dem Verbraucher angeordnet ist, um ab dem Zündzeitpunkt des Schaltelements bis zum Ende jeder Halbwelle des Sinus-Signals der Wechselstromquelle Energie zuzuführen, wobei der Schaltkreis eine Steuereinrichtung (32) aufweist, mit

— einem Null-Durchgangs-Detektor (42), der unter Ansprechen auf ein Wechselstromsignal von der Wechselstromquelle (10) Null-Durchgangs-Impulse erzeugt, die den Null-Durchgangs-Zeitpunkten des Wechselstromsignals entsprechen,

— Auswerteinrichtungen, die einen Integrator aufweisen, die unter Ansprechen auf die Null-Durchgangs-Impulse und das Quadrat der Spannung in jeder Halbwelle des Wechselstromsignals ein Ausgangssignal (48) erzeugen, das die Energie angibt, die dem Verbraucher (12) als Funktion der Schaltdauer des Wechselstromsignals während jeder Halbwelle des Wechselstromsignals zugeführt werden kann und

— Vergleichseinrichtungen (54) zum Vergleichen des Ausgangssignals (48) mit dem Fehlersignal (56) und zur Steuerung des Zündzeitpunktes des Schaltelements, um die Schaltdauer des Wechselstromsignals, das dem Verbraucher (12) von der Quelle (10) zugeführt wird, zu verändern,

dadurch gekennzeichnet, daß

— das Fehlersignal den Energiebedarf des Verbrauchers angibt,

— die Auswerteeinrichtung so ausgebildet ist, daß ihr Ausgangssignal (48), dessen Größen die Integration des Quadrats das Sinus-Signals der Wechselstromquelle vom Zündzeitpunkt bis zum Ende jeder Halbwelle darstellen, während jeder Halbwelle des Wechselstromsignals in jedem Zeitpunkt der tatsächlichen Energie proportional ist, die als Funktion der Schaltdauer des Wechselstromsignals dem Verbraucher (12) zugeführt werden kann und am Ende jeder Halbwelle des Wechselstromsignals Null ist,

— die Auswerteeinrichtung zur Bestimmung aller Größen des Ausgangssignals (48), Einrichtungen (44, 46 und 60 bis 84) zur Bestimmung des Qadrats des Scheitelwertes der Spannung des Wechselstromsignals und zur Zuführung des Quadrats des Scheitelwertes der Spannung zur Integratoreinrichtung und zur Bestimmung der weiteren Größen des Ausgangssignals (48) und zur Aufsummierung aller Größen aufweist, um das Ausgangssignal zu erhalten, und

— das Schaltelement ein Triac (34) ist.

2. Ein Steuerschaltkreis nach Anspruch 1, dadurch gekennzeichnet, daß die Auswerteeinrichtung aufweist:

— einen Scheitelwertdetektor (44) zur Feststellung des Scheitelwertes der Spannung des Wechselstromsignals,

— einen Quadrierungsschaltkreis (60), der zur Erzeugung des Quadrats des Scheitelwertes der Spannung mit dem Scheitelwertdetektor (44) verbunden ist, wobei der Integrator (66, 68) mit dem Quadrierungsschaltkreis (60) verbunden ist, um zur Bereitstellung des integrierten quadrierten Signals das Quadrat des Scheitelwerts der Spannung zu integrieren,

— einen trigonometrische Funktionen erzeugenden Schaltkreis (46, 80) zur Erzeugung eines Sinus-2-$\theta$-Signals, wobei $\theta$ während jeder Halbwelle des Wechselstromsignals von 0 bis $\pi$ variiert,

— einen Schalter (70), der zum Rücksetzen des Integrators (66, 68) während jedes Null-Durchgangs des Wechselstromsignals mit dem Null-Durchgangs-Detektor (42) verbunden ist und

— Summiereinrichtungen (64, 86) zum fortlaufenden Summieren des quadrierten Signals, des integrierten quadrierten Signals und des Sinus-2-$\theta$-Signals.

3. Ein Steuerschaltkreis nach Anspruch 1, dadurch gekennzeichnet, daß

— die Auswerteeinrichtung das Ausgangssignal dadurch erzeugt, daß eine trigonometrische Sinus-Funktion synchron mit dem Wechselstromsignal erzeugt wird und

— das Quadrat des Produkts der Scheitelwert der Spannung und der Sinus-Funktion jede Halbwelle des Wechselstromsignals aufintegriert wird.

*Fig.1.*

*Fig. 3.*

Fig.2.